# FASCICULE DE BREVET EUROPEEN

(11) **EP 3 900 967 B1**
(45) Date de publication et mention de la délivrance du brevet: **03.07.2024**
(21) Numéro de dépôt: 21168748.8
(22) Date de dépôt: 16.04.2021
(51) Int. Cl.: B60K 1/04, B60L 53/00, B62J 1/12, B62J 9/14, B62J 43/16, B60L 53/16, B60L 53/80, B60L 50/64, B60L 50/60

(54) **DISPOSITIF DE RECEPTION D'UNE BATTERIE POUR VEHICULE ELECTRIQUE ET VEHICULE COMPORTANT UN TEL DISPOSITIF**
VORRICHTUNG ZUR AUFNAHME EINER BATTERIE EINES ELEKTRISCHEN FAHRZEUGS UND FAHRZEUG, DAS EINE SOLCHE VORRICHTUNG UMFASST
DEVICE FOR RECEIVING A BATTERY FOR ELECTRIC VEHICLE AND VEHICLE COMPRISING SUCH A DEVICE

(30) Priorité: 21.04.2020 FR 2003972
(43) Date de publication de la demande: 27.10.2021
(73) Titulaire: ZE Way, 75001 Paris (FR)
(72) Inventeur: ROSTAN, Johannes, 545085 SINGAPOUR (SG); BOCH, Thierry, 75001 PARIS (FR); SINÉUS, Kévin, 75001 PARIS (FR)
(74) Mandataire: Santarelli

(56) Documents cités:
- EP-A2- 2 280 436
- EP-B1- 2 280 436
- WO-A1-2012/035254
- WO-A1-2020/065868
- CN-A- 103 050 808
- FR-A1- 2 947 674

## Description

La présente invention concerne le domaine des véhicules électriques, et notamment des véhicules électriques bicycles, tricycles ou quadricycles, et les solutions de mobilités similaires.

Une application préférentielle de la présente invention concerne les scooters électriques.

L'invention porte plus particulièrement sur les véhicules électriques qui embarquent au moins une batterie pour fournir l'électricité pour l'alimentation d'un ou plusieurs moteurs électriques de propulsion, et qui sont configurés pour que l'utilisateur puisse échanger lui-même la (ou les) batterie lorsque cette dernière est déchargée. De manière générale, l'échange d'une batterie peut consister, pour un utilisateur, à se rendre à proximité d'un point d'échange et de recharge d'un réseau de stations d'échange de batterie, à retirer la batterie déchargée de son véhicule, à échanger, dans un dispositif adapté pouvant être appelé par exemple « station » ou « station d'échange », la batterie déchargée contre une batterie chargée, et à placer la batterie chargée ainsi récupérée dans son véhicule.

Ce type de réseau de stations d'échange de batteries se développe actuellement, et se révèle particulièrement judicieux en milieu urbain. En effet, les véhicules visés, notamment les scooters, sont particulièrement bien adaptés à s'y déplacer, les distances à parcourir sont relativement faibles, et il est aisé d'y constituer un réseau de stations d'échange de batteries selon un maillage géographique cohérent et pouvant être utilisé par de nombreux utilisateurs.

Bien que l'invention soit applicable préférentiellement à des véhicules utilisant de tels réseaux de stations d'échange de batteries, elle est applicable de manière générale à tout véhicule dont la batterie peut être extraite du véhicule par l'utilisateur, par exemple en vue de sa recharge.

Pour que l'expérience de l'utilisateur soit satisfaisante, il est nécessaire que l'extraction et la mise en place de la batterie soient les plus simples possibles. En effet, malgré les avancées récentes dans le domaine des batteries, le poids d'une batterie de propulsion d'un scooter électrique demeure relativement important, par exemple de l'ordre de dix kilogrammes (selon l'autonomie souhaitée pour le véhicule), de sorte que toute mesure permettant d'en faciliter la manipulation est souhaitable. En outre, l'échange de la batterie doit être le plus rapide possible. Enfin, les étapes de l'extraction et de la mise en place d'une batterie doivent être simples et intuitives, et ne doivent présenter aucune complexité technique afin d'être accessible à tout utilisateur, avec la meilleure ergonomie possible. En particulier, la fixation de la batterie doit être simple, elle ne doit nécessiter, autant que possible, aucun verrouillage complexe.

A cette fin, la demanderesse a développé une batterie de forme générale prismatique droite, en l'occurrence parallélépipédique, comportant sur une face une poignée de portage et manipulation, et sur une face opposée un connecteur électrique. La batterie est ainsi adaptée à être insérée dans un logement de réception de forme correspondante ménagé dans le véhicule recevant la batterie. Le logement comporte sur son fond un connecteur adapté à coopérer par enfichage avec celui de la batterie, de sorte à assurer une connexion électrique entre la batterie et le système électrique du véhicule. Idéalement, la connexion peut être réalisée sous le seul effet du poids de la batterie, par exemple dans une configuration préférentielle dans laquelle la batterie est logée sensiblement verticalement. Dans une telle configuration, la batterie coulisse sous son propre poids dans le logement de réception du véhicule et s'enfiche avec le connecteur électrique du logement.

Ce type de connexion, qui est très simple, présente néanmoins des inconvénients irrésolus ou incorrectement résolus dans l'état de la technique. Le véhicule est soumis lors de son roulage à des accélérations, et notamment des accélérations verticales. De telles accélérations peuvent par exemple être provoquées par un passage sur une bosse, dans un creux, et plus généralement par un roulage sur une surface irrégulière. Cela peut avoir plusieurs conséquences négatives. Un mouvement répété de la batterie, même de faible amplitude, provoque une usure mécanique par friction du connecteur électrique de la batterie et/ou du connecteur correspondant du véhicule. Surtout, cela peut altérer la qualité de la connexion électrique entre la batterie et le véhicule. Une mauvaise connexion électrique limite la puissance pouvant être transmise, mais surtout augmente la résistance électrique au niveau de la connexion. La fluctuation de résistance électrique dans la connexion provoque un échauffement, qui d'une part traduit une perte d'énergie qui a une influence négative sur l'autonomie du véhicule, mais aussi et surtout provoque une dégradation ou une usure des connecteurs électriques. Enfin, cette fluctuation peut provoquer des variations dans la puissance instantanée fournie par la batterie, ce qui peut être préjudiciable à sa longévité.

Le document WO2012/035254A1 porte sur une structure de véhicule automobile électrique comprenant un logement destiné à recevoir une batterie d'accumulateurs amovible. Des organes de liaison présents dans le logement comprennent un ensemble élastiquement déformable pour amortir les oscillations horizontales (c'est-à-dire transversales à la direction d'introduction verticale de la batterie) de la partie supérieure de la batterie par rapport à ladite portion supérieure de structure.

Le document WO2020/065868 présente un dispositif de réception d'une batterie comportant un connecteur monté sur ressort. Le connecteur peut ainsi suivre un mouvement de la batterie vers le haut tout en garantissant le maintien de la connexion.

L'invention vise ainsi à proposer un dispositif permettant de limiter, voire de supprimer, tout ou partie des inconvénients précités.

Ainsi l'invention porte sur un dispositif de réception d'une batterie pour véhicule électrique. Le dispositif comporte un logement ménagé dans une structure du véhicule et adapté à recevoir au moins une batterie. Le logement comporte une face ouverte pour l'introduction de la batterie dans le logement selon une direction d'introduction de la batterie. Le logement comporte un fond opposé à sa face ouverte, et le dispositif comporte au niveau dudit fond un support de connecteur et un connecteur électrique du véhicule lié audit support de connecteur. Le connecteur électrique du véhicule est adapté à coopérer par enfichage selon la direction d'introduction de la batterie avec un connecteur électrique de la batterie correspondant. Selon l'invention, le support de connecteur est relié à la structure du véhicule par des moyens élastiques adaptés à se déformer selon la direction d'introduction de la batterie.

Les moyens élastiques permettent un mouvement du support de connecteur et donc du connecteur électrique du véhicule. Cela permet au connecteur électrique du véhicule de suivre un mouvement de la batterie, selon la direction d'introduction de la batterie et d'enfichage, de sorte que la connexion électrique entre la batterie et le véhicule n'est pas dégradée. Notamment, si la batterie est introduite sensiblement verticalement dans le véhicule, les moyens élastiques permettent (au moins) un mouvement vertical du support de connecteur. Le cas échéant, les moyens élastiques permettent un amortissement de ce mouvement.

Le logement peut avoir une forme prismatique de base non-circulaire, de sorte que des parois du logement guident à la batterie, qui présente une forme correspondante à un jeu près, dans la direction d'introduction de la batterie.

La forme du logement détermine, dans ce mode de réalisation, la direction d'introduction de la batterie, et guide la batterie lors de sa mise en place dans le véhicule et de son retrait. La mise en place et le retrait de la batterie dans le logement sont ainsi très simples. En outre, par exemple sous l'effet de son propre poids, la batterie peut se connecter au connecteur électrique du véhicule. Les moyens élastiques peuvent ainsi contribuer, en alternative ou en complément à l'emploi d'un connecteur à alignement automatique, à la correction de l'alignement entre le connecteur électrique de la batterie et le connecteur électrique du véhicule.

Le dispositif peut comporter un couvercle permettant d'obturer dans une position fermée, ou de libérer dans une position ouverte, la face ouverte du logement, le couvercle dans la position fermée comportant une face interne au logement dotée d'un élément élastique adapté à prendre appui sur une face de la batterie opposée au connecteur électrique de la batterie.

L'élément élastique prenant appui sur la face de la batterie opposée au connecteur électrique de batterie, la batterie se trouve ainsi logée, dans la structure du véhicule, entre les moyens élastiques d'une part et l'élément élastique d'autre part. Le mouvement de la batterie est ainsi amorti dans les deux sens de mouvement possibles. Par exemple, si la batterie est introduite verticalement dans le logement, l'élément élastique va limiter et amortir tout mouvement vers le haut de la batterie, tandis que les moyens élastiques vont limiter et amortir tout mouvement vers le bas. En outre, l'élément élastique prenant appui sur la face de la batterie opposée au connecteur électrique de batterie, il peut être précontraint de sorte à assurer un bon maintien de la batterie. Les moyens élastiques sont quant à eux précontraints par la force appliquée sur l'élément élastique lors de la fermeture du couvercle du logement, mais aussi généralement avant tout par le poids de la batterie.

Le couvercle peut notamment être une selle liée à la structure du véhicule.

Le volume situé sous la selle d'un scooter électrique est généralement le plus approprié à recevoir la batterie. En outre, la selle comportant généralement un mécanisme qui en permet le basculement pour dégager ce volume constitue un couvercle approprié, et généralement sécurisé, pour le logement de réception de la batterie.

L'élément élastique est par exemple formé d'un bloc de mousse élastique. La mousse utilisée peut être une mousse en élastomère, par exemple en caoutchouc, en polyuréthane, ou en silicone. De nombreuses configurations d'élément élastique sont envisageables dans le cadre de la présente invention. Néanmoins, un élément élastique formé d'un bloc d'une mousse élastique présente de nombreux avantages. Il est simple à mettre en oeuvre, peu coûteux, permet une bonne conformation géométrique vis-à-vis de la surface de la batterie sur lequel il est en appui, et procure une force d'appui répartie de manière homogène sur la batterie.

Dans un mode de réalisation, le fond du logement est fixe vis-à-vis de la structure du véhicule, et le support de connecteur est relié audit fond par les moyens élastiques. Dans un autre mode de réalisation, le support de connecteur est lié rigidement au fond du logement ou formé par le fond du logement, et le fond du logement est relié à la structure du véhicule par les moyens élastiques.

Différentes configurations peuvent ainsi être mises en oeuvre afin de permettre au support de connecteur de suivre le mouvement de la batterie, seul ou fixé à une autre pièce (notamment une pièce formant le fond du logement, et, le cas échéant, tout ou partie de ses parois latérales).

Les moyens élastiques sont constitués d'un ensemble de plots élastiques. Chaque plot élastique peut être formé d'un ou plusieurs éléments en élastomère, par exemple en caoutchouc, en polyuréthane, ou en silicone. Par exemple, chaque plot élastique peut être creux ou peut comporter une ouverture qui en réduit la rigidité dans la direction d'introduction de la batterie. Notamment, les moyens élastiques peuvent avoir une dureté comprise entre Shore 00 10 et Shore A 100.

Un ensemble de plots élastiques est une façon simple et efficace de constituer ces moyens élastiques. Le terme « plot élastique » fait en particulier référence aux dispositifs couramment désignés par l'expression « silent-bloc » (marque déposée), également parfois appelés « butée élastique ». Le matériau constitutif, la forme, et le nombre des plots élastiques peuvent être choisis pour obtenir les propriétés élastiques souhaitées. En particulier, pour une batterie installée verticalement dont les plots élastiques supportent le poids, les moyens élastiques doivent être en mesure de supporter ce poids et de manière générale toute autre pré-contrainte sans être complètement écrasés, mais sans être trop rigides, de sorte à permettre un mouvement vertical de la batterie vers le haut et vers le bas, tout en maintenant sa bonne connexion électrique. En outre, la raideur des plots peut être choisie selon la fréquence des excitations envisagées, de sorte à permettre un amortissement et en évitant les fréquences de résonnance et certaines harmoniques.

L'invention porte également sur un véhicule, notamment un scooter électrique, comportant un dispositif tel que défini ci-dessus.

D'autres particularités et avantages de l'invention apparaîtront encore dans la description ci-après.

Aux dessins annexés, donnés à titre d'exemples non limitatifs :
- la figure 1 représente, selon une vue tridimensionnelle schématique, un scooter électrique comportant un dispositif de réception d'une batterie selon un mode de réalisation de l'invention ;
- la figure 2 représente, selon une vue tridimensionnelle schématique, un exemple de batterie pouvant être mise en oeuvre dans l'invention ;
- la figure 3 représente, selon une autre vue tridimensionnelle schématique, la batterie de la figure 2 ;
- la figure 4 représente, selon une vue schématique en trois dimensions, une vue de détail du logement de batterie du scooter de la figure 1 ;
- la figure 5 représente, selon une vue schématique en trois dimensions, une vue de détail d'un logement de batteries selon un autre mode de réalisation de l'invention ;
- la figure 6 représente, selon une vue schématique en trois dimensions, un support de connecteur pouvant être mis en oeuvre dans des modes de réalisation de l'invention ;
- la figure 7 représente, selon une vue schématique de principe, un dispositif de réception d'une batterie pour véhicule électrique, selon un premier mode de réalisation de l'invention ;
- la figure 8 représente, selon une vue schématique de principe, un dispositif de réception d'une batterie pour véhicule électrique, selon un deuxième mode de réalisation de l'invention.

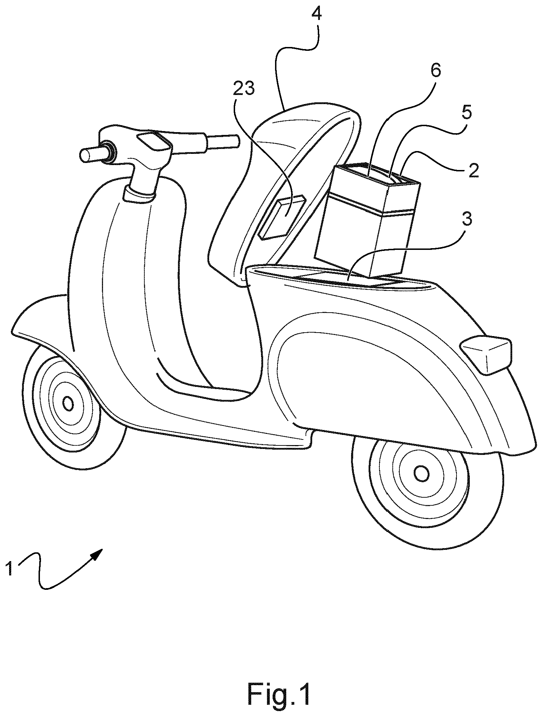

La figure 1 représente, selon une vue tridimensionnelle, un scooter électrique comportant un dispositif de réception d'une batterie selon un mode de réalisation de l'invention.

Le scooter 1 est un scooter à propulsion électrique. A cette fin, une batterie 2 est destinée à fournir l'énergie nécessaire à la propulsion du scooter 1. En particulier, la batterie alimente un système d'électronique de puissance qui assure l'alimentation électrique d'un moteur électrique, qui permet de propulser le scooter.

Le scooter 1 comporte un logement 3 pour la réception et le branchement de la batterie 2. Le logement 3 est très facile d'accès, se situant, dans l'exemple ici représenté, sous la selle 4 du scooter. La zone sous la selle 4 est, de manière connue, accessible par basculement de la selle 4.

Afin de permettre une mise en place et un retrait facile de la batterie 2 dans le logement 3, le logement 3 peut se présenter essentiellement sous la forme d'un puits permettant une insertion sensiblement verticale de la batterie dans le logement.

Ainsi, le scooter de la figure 1 est particulièrement bien adapté à un échange rapide de la batterie, par exemple pour remplacer une batterie déchargée par une batterie chargée.

Le remplacement de la batterie 2 sur le scooter 1 consiste ainsi simplement à ouvrir la selle 4, extraire par traction la batterie 2 du logement 3, introduire une nouvelle batterie dans le logement 3, et refermer la selle 4.

Une telle séquence simple et rapide est compatible de l'emploi du scooter dans un réseau de stations d'échange de batteries.

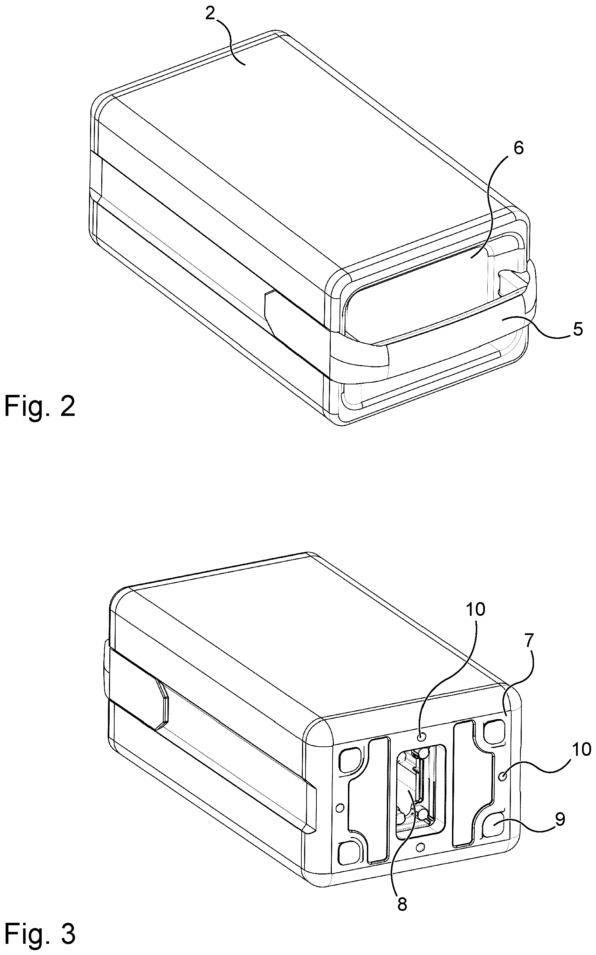

Un exemple de batterie 2 pouvant être utilisée dans le scooter de la figure 1 est représentée à la figure 2.

La batterie 2 comporte un ensemble de cellules électriques, par exemple de technologies lithium-ion, bien que toute autre technologie de batterie soit envisageable dans le cadre de la présente invention (notamment au plomb, nickel-cadmium, nickel-métal-hydrure, lithium-polymère, lithium-fer-phosphate, aluminium, etc.). La tension nominale de la batterie est adaptée à l'application visée, et peut être à titre d'exemple de 36V, 48V, 60V, 72V, ou toute autre tension appropriée.

La batterie a une forme générale adaptée au logement 3, et comporte une poignée 5 située dans la zone privilégiée de préhension de la batterie, selon la direction d'introduction de la batterie 2 dans le logement 3. Le logement 3 du scooter 1 permettant une introduction sensiblement verticale, la poignée 5 est ménagée sur une face dite supérieure 6 de la batterie.

La batterie présente une forme sensiblement parallélépipédique, s'étendant selon sa direction d'introduction dans le logement 3 du scooter 1, et comportant des arêtes arrondies. Les arêtes arrondies de la batterie facilitent son introduction dans le logement 3 et permettent également de rendre sa manipulation plus agréable et moins contondante pour l'utilisateur.

Bien évidemment, toute autre configuration de batterie est envisageable, notamment toute forme prismatique droite comme détaillé ci-après.

La batterie 2 peut comporter, outre les cellules de batteries, une ou plusieurs cartes électroniques, pouvant comporter notamment un microprocesseur et le cas échéant une mémoire. Ces moyens électroniques peuvent être destinés à la réalisation de diverses fonctions liées à la gestion de la batterie, notamment de sa charge, à l'enregistrement de données relatives à son usage (tension, courants de charge/décharge, informations temporelles, etc). Ces moyens électroniques forment un système de gestion de batterie, couramment désigné par l'acronyme anglophone BMS pour « Battery Management System ».

Comme cela est montré à la figure 3, la face de la batterie opposée à la face sur laquelle est ménagée la poignée 5, pouvant être appelée base 7 de la batterie, comporte un connecteur électrique de la batterie 8. La base 7 constitue également une face sur laquelle la batterie peut être posée sur le sol, et peut ainsi comporter des plots d'appui 9. On notera que bien que le terme connecteur électrique soit employé au singulier, il s'agit d'un ensemble de plusieurs contacts électriques regroupés et organisés sous forme d'une prise, adaptée au branchement d'une prise correspondante. Le connecteur électrique de la batterie 8 est dit « femelle », en ce qu'il est formé dans la batterie 2 et est adapté à recevoir un connecteur électrique « mâle » s'y insérant. Le connecteur électrique de la batterie 8 est ainsi doté d'un ensemble de contacts femelles adaptés à recevoir des contacts mâles correspondants. Les contacts peuvent être agencés de sorte à permettre une connexion de la batterie selon plusieurs orientations. Par exemple, les contacts peuvent être symétriques, à savoir un contact central et deux contacts répartis de part et d'autre, permettant une connexion selon deux orientations.

La batterie comporte en outre des orifices de centrage 10, permettant le centrage de la batterie dans son logement 3 de réception, et son guidage lors de la connexion du connecteur électrique de la batterie 8.

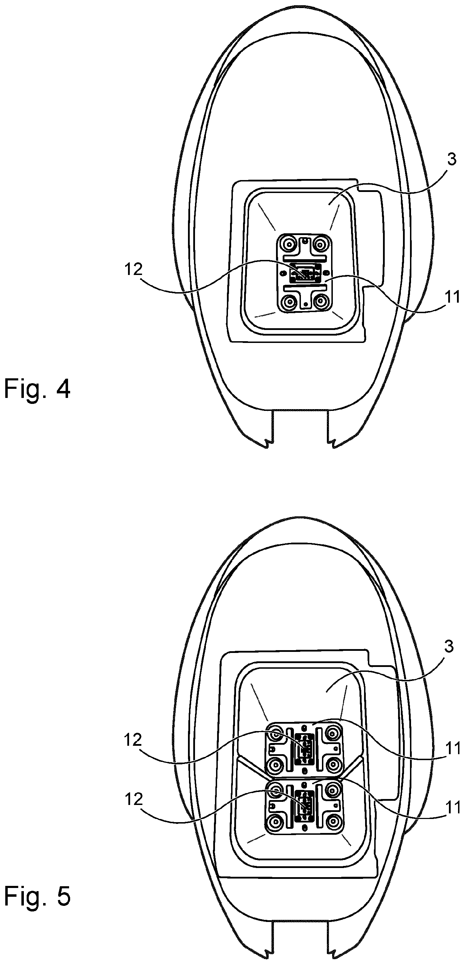

La figure 4 représente une vue de détail du logement de batterie du scooter de la figure 1. En particulier, le logement 3, qui a la forme d'un puits sous la selle du scooter, est vu en plongée. Le logement 3 a une face ouverte, ici sa face supérieure, qui permet l'introduction de la batterie. Le logement 3 a une forme sensiblement parallélépipédique, en correspondance avec la forme de la batterie à un jeu fonctionnel près qui en permet l'insertion et le retrait aisé. Il est ainsi bien évident que le logement pourrait avoir toute forme prismatique droite, en correspondance de la forme générale de la batterie. Afin d'imposer une orientation d'insertion, une forme qui n'est pas de révolution est préférable, c'est-à-dire que le logement 3 est préférentiellement non cylindrique de révolution. Le logement 3 guide ainsi la batterie en translation lors de son insertion, en vue de sa connexion au scooter. Dans l'exemple ici représenté, deux orientations de la batterie 2 sont possibles lors de son insertion.

Le logement de batterie sous la selle 4 est avantageux pour ce qui concerne l'équilibre général du scooter en utilisation, et aussi du fait de la proximité avec le moteur de propulsion.

Au fond du logement 3 est disposé un support de connecteur 11 qui porte le connecteur électrique du véhicule 12 (à savoir du scooter 1) destiné à être connecté au connecteur électrique de la batterie 8.

La figure 5 représente une vue de détail d'un logement de batteries selon un autre mode de réalisation de l'invention. Le logement 3 est essentiellement identique à celui de la figure 4, mais est adapté à la réception de deux batteries. Cela permet d'augmenter l'autonomie du véhicule, ou de garantir une autonomie suffisante pour un véhicule nécessitant une puissance importante pour se déplacer. Cela peut concerner un véhicule plus lourd, et/ou dont la charge attendue est importante, par exemple un véhicule destiné à des livraisons.

Le logement 3 comporte ainsi deux puits contigus, au fond desquels sont disposés deux supports de connecteur 11. Chaque support de connecteur 11 porte un connecteur électrique du véhicule 12 destiné à être connecté au connecteur électrique d'une batterie.

Selon ce principe, le véhicule peut comporter plus de deux batteries, par exemple trois batteries.

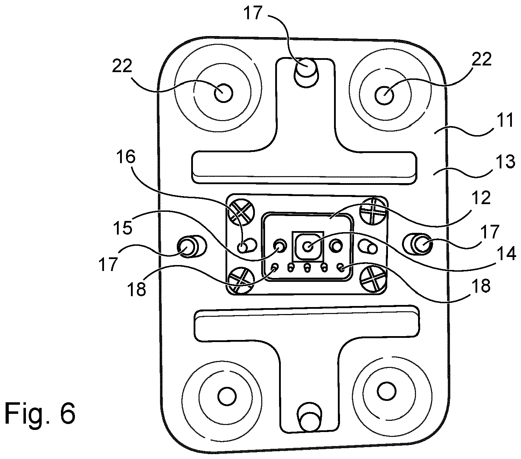

La figure 6 illustre un exemple de support de connecteur 11 pouvant être mis en oeuvre dans l'invention. Le support de connecteur 11 est formé par une plaque rigide 13, sur laquelle est montée le connecteur électrique du véhicule 12. Dans l'exemple ici représenté, le connecteur électrique du véhicule 12 est ainsi un connecteur mâle, adapté à être enfiché dans un connecteur électrique de la batterie 8 correspondant.

Le connecteur électrique du véhicule 12 comporte plusieurs contacts électriques mâles. En l'occurrence, un contact de pôle négatif 14 est ménagé au centre et est destiné à être connecté à la borne négative de la batterie. Deux contacts de pôle positif 15 sont disposés de part et d'autre du contact de pôle négatif 14. La disposition symétrique des contacts de pôle positif 15 permet un branchement selon deux orientations opposées de la batterie 2 et de son connecteur électrique de la batterie 8 sur le connecteur électrique de la batterie 8.

Le connecteur électrique du véhicule 12 comporte en outre des plots de guidage 16, permettant un guidage fin des connecteurs entre eux lors de leur connexion par enfichage. Les plots de guidage 16 du connecteur électrique du véhicule 12 coopèrent par correspondance de forme avec le connecteur électrique de la batterie 8 lors de l'enfichage. De même, le support de connecteur 11 comporte des tenons de centrage 17 qui pénètrent dans les orifices de centrage 10 de la batterie lors de sa connexion. Le connecteur électrique du véhicule 12 peut en effet être monté flottant sur le support de connecteur 11. Selon un tel montage flottant, le connecteur électrique du véhicule 12 présente deux degrés de liberté, dans le plan formé par le support de connecteur, c'est-à-dire en l'occurrence par la plaque rigide 13.

Cela permet un alignement automatique du connecteur électrique du véhicule 12 vis-à-vis du connecteur électrique de la batterie 8 lors du branchement de la batterie 2. Enfin, le connecteur électrique du véhicule 2 comporte, dans l'exemple ici représenté, des contacts électriques additionnels 18. Tout ou partie de ces contacts électriques additionnels 18 peuvent permettre un contrôle individuel ou par groupe de cellules.

En particulier, certains de ces contacts électriques additionnels 18 peuvent par exemple être employés afin de permettre la communication de données depuis et/ou vers la batterie. Ces contacts permettent ainsi la communication du véhicule avec le système de gestion de la batterie. De plus, l'un des contacts électriques additionnels 18 peut être plus court que les autres, de sorte que la détection de sa connexion peut servir à garantir que la batterie est correctement mise en place, avec un branchement correct de son connecteur.

Alternativement ou en complément, la communication entre la batterie et le véhicule, et vice-versa, peut être réalisée par des moyens de communication sans contact.

Bien évidemment, selon des modes de réalisation alternatifs de l'invention, la polarité peut être inversée dans les connecteurs (pôle positif au centre, pôles négatifs de part et d'autre). De même, le caractère mâle ou femelle des connecteurs peut être inversé, la batterie ayant alors un connecteur électrique de la batterie 8 mâle, et le véhicule ayant alors un connecteur électrique de véhicule 12 femelle. Les contacts de chaque connecteur peuvent comprendre des contacts mâles et des contacts femelles dans un même connecteur.

Le support de connecteur 11 et donc le connecteur électrique du véhicule 12 étant ainsi disposés au fond du logement 3, la batterie 2 peut être connectée au scooter 1 par simple insertion en translation dans le logement 3. La connexion électrique entre la batterie 2 et le scooter 1 est obtenue par enfichage du connecteur électrique du véhicule 12 dans le connecteur électrique de la batterie 8. L'enfichage est réalisé selon la direction d'introduction de la batterie 2 dans le logement 3.

Le poids de la batterie peut avantageusement aider à cet enfichage, voire suffire à cet enfichage. En outre, l'enfichage des connecteurs ne doit pas créer une résistance mécanique trop importante qui rendrait difficile l'extraction de la batterie 2 du logement 3.

Comme expliqué ci-avant, ce type de connexion par simple enfichage présente néanmoins des inconvénients, d'autant plus importants que le véhicule est destiné à un usage urbain, et est donc amené à réaliser des roulages sur des surfaces irrégulières, à monter des trottoirs, etc., et donc à subir des chocs et accélérations verticales susceptibles de faire bouger la batterie 2 dans son logement 3.

Cela peut entrainer une usure mécanique du connecteur électrique de la batterie et/ou du connecteur correspondant du véhicule. Cela peut aussi altérer la qualité de la connexion électrique entre la batterie et le véhicule. Cela peut altérer le connecteur, augmenter les pertes thermiques au niveau de la connexion électrique, limiter la durée de vie de la batterie.

Afin de remédier à ces inconvénients, il est proposé selon l'invention de relier le support de connecteur 11 au reste du véhicule, et notamment à une structure fixe du véhicule par des moyens élastiques.

En particulier, les moyens élastiques adaptés à se déformer selon la direction d'introduction de la batterie, c'est-à-dire selon la direction selon laquelle la batterie est susceptible de bouger dans le logement. Dans l'exemple ici représenté, le support de batterie est donc légèrement mobile selon une déformation verticale des moyens élastiques.

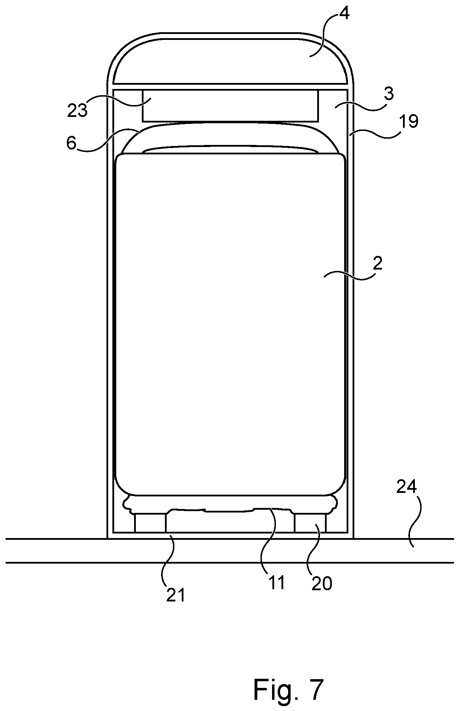

Un premier exemple de mode de réalisation est représenté à la Figure 7.

Dans ce mode de réalisation, le logement 3 de réception de la batterie 2 est formé d'un bac 19 rigidement fixé à une structure du véhicule 24. La structure du véhicule 24 peut être typiquement un châssis du véhicule ; la structure du véhicule 24 peut être un cadre du scooter 1. Les moyens élastiques 20 sont, selon ce premier mode de réalisation, interposés entre un fond 21 du logement 3 (c'est à un dire le fond 20 du bac 19) et le support de connecteur 11.

Les moyens élastiques sont formés dans cet exemple de quatre plots élastiques (couramment appelés silent-blocs (marque déposée)). Les plots élastiques sont liés à proximité des quatre coins de la plaque rigide 13, par des trous de fixation 22 (visibles à la figure 6).

Les moyens élastiques permettent au support de connecteur 11 de suivre un mouvement de la batterie dans le logement 11, en cas de choc vertical ou plus généralement d'accélération verticale soudaine du véhicule. L'enfichage et la connexion électrique des connecteurs restent ainsi parfaits. En outre, les moyens élastiques peuvent permettre d'amortir le mouvement de la batterie 2 dans le logement 3.

Afin d'offrir un contrôle et un amortissement encore meilleur des mouvements de la batterie, la demanderesse a constaté l'intérêt de prévoir en outre un élément élastique 23 qui prend appui sur la face de la batterie opposée au connecteur électrique de la batterie 8. En l'occurrence, l'élément élastique 23 prend appui sur la face supérieure 6 de la batterie.

L'élément élastique 23 peut par exemple être formé par un bloc de mousse élastique. Notamment une mousse en élastomère, par exemple en caoutchouc, en polyuréthane, ou en silicone peut être utilisée. L'élément élastique 23 est fixé, par exemple collé, sous la selle 4, comme cela est illustré à la figure 7 et à la figure 1. Lorsque la selle 4, qui forme un couvercle pour le logement 3, est fermée, l'élément élastique 23 prend appui sur la batterie 2. La batterie 2 se trouve ainsi suspendue entre les moyens élastiques 20 et l'élément élastique 23.

L'élément élastique 23 peut être légèrement précontraint contre la batterie 2.

Il ajoute ainsi à la précontrainte des moyens élastiques 20 qui est liée au poids de la batterie.

Que le mode de réalisation comporte ou non un élément élastique 23, les moyens élastiques doivent être choisis de sorte à permettre un mouvement de la batterie tant vers le haut que vers le bas. Ainsi, la précontrainte liée au poids de la batterie, et le cas échéant la précontrainte exercée par l'élément 23, sont pris en compte pour choisir les moyens élastiques. Notamment, les caractéristiques des moyens élastiques sont déterminées de manière adéquate pour ce qui concerne leur forme, leur nombre, leur matériau (ou matériaux) constitutif, etc.

Pour la réalisation des moyens élastiques 20, des plots élastiques en élastomère, par exemple en caoutchouc, en polyuréthane, ou en silicone, peuvent être employés avec succès. Les propriétés d'amortissement peuvent aussi être prises avantageusement en considération.

Selon le poids de la batterie, des moyens élastiques ayant une dureté comprise entre Shore 00 10 et Shore A 100 sont envisageables pour la réalisation de l'invention.

Des plots en caoutchouc, au nombre de quatre, ayant une épaisseur élastique comprise entre 0,5 mm et 5 cm ont été employés avec succès. En outre, la forme même des plots élastiques peut être mise à profit pour réaliser la souplesse souhaitée, et/ou pour en améliorer les propriétés amortissantes. Des plots creux, comportant une ouverture, peuvent ainsi être employés. Des plots formés de plusieurs matériaux élastiques, et le cas échéant d'un matériau amortissant, peuvent être employés.

On notera que les moyens élastiques peuvent ainsi venir en substitution ou en complément du montage flottant du connecteur électrique du véhicule 12 qui permet un alignement entre le connecteur du véhicule et le connecteur de la batterie.

En effet, les moyens élastiques, bien qu'essentiellement configurés pour permettre un mouvement et un amortissement vertical de la batterie peuvent permettre, le cas échéant, un certain mouvement du connecteur électrique du véhicule 12 assurant son alignement vis-à-vis du connecteur électrique de la batterie 8. L'emploi d'un montage flottant du connecteur électrique du véhicule 12 est néanmoins préféré, afin de supprimer les contraintes transversales dans les contacts électriques après connexion de la batterie 2.

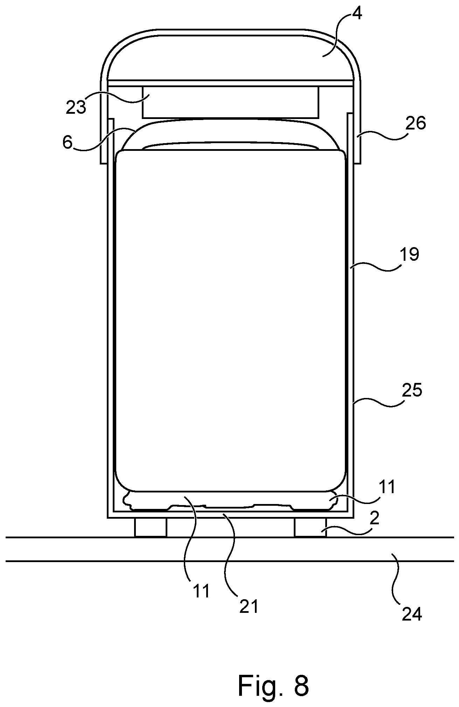

La figure 8 représente un deuxième mode de réalisation. Ce deuxième mode de réalisation est essentiellement similaire au premier mode de réalisation, aux différences près exposées ci-après, de sorte que la description de la figure 7 s'applique essentiellement au mode de réalisation de la figure 8. Notamment, la description des moyens élastiques 20 et de l'élément élastique 23 optionnel s'appliquent complètement à ce mode de réalisation.

Le principe développé dans l'invention selon lequel le support de connecteur est relié à la structure du véhicule par des moyens élastiques est réalisé dans ce mode de réalisation en interposant les moyens élastiques 20 entre la structure du véhicule 24 et le fond 21 du bac 19 formant le logement 3. Le support de connecteur étant rigidement fixé au fond 21, le fond du bac 19 est quant à lui mobile vis-à-vis de la structure du véhicule 24. A cette fin, le bac 19 est formé en deux parties, à savoir une partie basse 25 comportant le fond 21 qui est mobile vis-à-vis de la structure, et une partie haute 26, fermée par la selle 4, et qui est fixe vis-à-vis de la structure du véhicule 24. La partie basse 25 est en particulier mobile en translation verticale (dans ce mode de réalisation de l'invention dans lequel la direction d'introduction de la batterie est verticale, de manière générale les parties constitutives du bacs 19 selon ce deuxième mode de réalisation étant mobiles entre elles au moins selon ladite direction d'introduction de la batterie dans le logement 3) vis-à-vis de la partie haute 26.

Alternativement à une constitution en deux parties distinctes, le bac 19 peut comporter une zone déformable permettant un mouvement relatif entre la partie haute 25 et la partie basse 26. Dans ce mode de réalisation, les moyens élastiques 20 permettent au support de batterie 11 de suivre, conjointement avec le fond 21, le mouvement de la batterie 2. Ce mode de réalisation garantit l'absence totale de mouvement entre la batterie 2 et le support de batterie 11.

Enfin, selon le principe développé dans ce deuxième mode de réalisation, le support de batterie peut être intégralement formé avec le fond du bac 19, qui forme aussi le fond du logement 3.

L'invention ainsi développée permet de garantir une connexion, électrique et mécanique, fiable de la batterie d'un véhicule électrique lors d'une conduite sur un trajet cahoteux. Cette connexion fiable évite une usure prématurée des connecteurs ainsi que de la batterie. L'invention est tout particulièrement avantageuse pour les véhicules électriques, par exemple les scooters, dont la batterie peut être mise en place et retirée très facilement du véhicule, sans être rigidement fixée au véhicule par des moyens mécaniques complexes. L'invention est ainsi particulièrement avantageuse pour des véhicules permettant l'échange de leur batterie dans un réseau de stations d'échange de batteries en libre-service. Dans le cadre d'un tel service, il est en effet primordial que l'échange de la batterie soit simple à échanger, et que la durée de vie (en nombre de cycles de charge et décharge) de la batterie soit maximisée.

## Revendications

1. Dispositif de réception d'une batterie (2) pour véhicule électrique, le dispositif comportant
un logement (3) ménagé dans une structure du véhicule (24) et adapté à recevoir au moins une batterie (2), le logement (3) comportant une face ouverte pour l'introduction de la batterie (2) dans le logement (3) selon une direction d'introduction de la batterie dite verticale,
le logement (3) comportant un fond (21) opposé à sa face ouverte,
le dispositif comportant au niveau dudit fond (21) un support de connecteur (11) et un connecteur électrique du véhicule (12) lié audit support de connecteur (11), le connecteur électrique du véhicule (12) étant adapté à coopérer par enfichage selon la direction d'introduction de la batterie avec un connecteur électrique de la batterie (8) correspondant,
le support de connecteur (11) étant relié à la structure du véhicule (24) par des moyens élastiques,
le dispositif étant configuré pour que la batterie (2) puisse être connectée par simple insertion en translation dans le logement 3 ;
**caractérisé en ce que** les moyens élastiques (20) sont constitués d'un ensemble de plots élastiques adaptés à se déformer selon la direction d'introduction de la batterie de sorte à permettre un mouvement vertical de la batterie vers le haut et vers le bas ; et **en ce que** le dispositif comporte en outre un couvercle permettant d'obturer dans une position fermée, ou de libérer dans une position ouverte, la face ouverte du logement, le couvercle dans la position fermée comportant une face interne au logement (3) dotée d'un élément élastique (23) adapté à prendre appui sur une face de la batterie opposée au connecteur électrique de la batterie (8).

2. Dispositif selon la revendication 1, ledit dispositif étant configuré de sorte que les plots élastiques supportent le poids de la batterie.

3. Dispositif selon la revendication 1 ou la revendication 2, dans lequel le connecteur électrique du véhicule (12) est monté flottant sur le support de connecteur (11) de sorte qu'il présente deux degrés de liberté, dans un plan formé par le support de connecteur.

4. Dispositif selon l'une des revendication 1 à 3, dans lequel le logement (3) a une forme prismatique de base non-circulaire, de sorte que des parois du logement (3) guident à la batterie, qui présente une forme correspondante à un jeu près, dans la direction d'introduction de la batterie (2).

5. Dispositif selon l'une des revendications précédentes, dans lequel le couvercle est une selle (4) liée à la structure du véhicule (24).

6. Dispositif selon l'une quelconque des revendications précédentes, dans lequel l'élément élastique (23) est formé d'un bloc de mousse élastique.

7. Dispositif selon la revendication 6, dans lequel la mousse est une mousse en élastomère, par exemple en caoutchouc, en polyuréthane, ou en silicone.

8. Dispositif selon l'une quelconque des revendications précédentes, dans lequel le fond du logement (21) est fixe vis-à-vis de la structure du véhicule (24), et le support de connecteur (11) est relié audit fond par les moyens élastiques (20).

9. Dispositif selon l'une des revendications 1 à 7, dans lequel le support de connecteur est lié rigidement au fond du logement ou formé par le fond du logement, et dans lequel le fond du logement (21) est relié à la structure du véhicule (24) par les moyens élastiques.

10. Dispositif selon l'une quelconque des revendications précédentes dans lequel chaque plot élastique est formé d'un ou plusieurs éléments en élastomère, par exemple en caoutchouc, en polyuréthane, ou en silicone.

11. Dispositif selon la revendication l'une quelconque des revendications précédentes, dans lequel chaque plot élastique est creux ou comporte une ouverture qui en réduit la rigidité dans la direction d'introduction de la batterie.

12. Dispositif selon l'une des revendications précédentes, dans lequel les moyens élastiques ont une dureté comprise entre Shore 00 10 et Shore A 100.

13. Véhicule, notamment scooter (1) électrique, comportant un dispositif selon l'une quelconque des revendications précédentes

## Patentansprüche

1. Vorrichtung zum Empfangen einer Batterie (2) für ein elektrisches Fahrzeug, wobei die Vorrichtung beinhaltet
eine Aufnahme (3), die in einer Struktur des Fahrzeugs (24) eingerichtet ist, und angepasst ist, um mindestens eine Batterie (2) zu empfangen, wobei die Aufnahme (3) eine offene Seite zum Einsetzen der Batterie (2) in die Aufnahme (3) in einer sogenannten vertikalen Einsetzrichtung der Batterie beinhaltet,
wobei die Aufnahme (3) einen Boden (21) gegenüber ihrer offenen Seite beinhaltet,
wobei die Vorrichtung im Bereich des Bodens (21) eine Steckverbinder-Stütze (11) und einen elektrischen Steckverbinder des Fahrzeugs (12) beinhaltet, der an die Steckverbinder-Stütze (11) gebunden ist,
wobei der elektrische Steckverbinder des Fahrzeugs (12) angepasst ist, um durch Einstecken in der Einsetzrichtung der Batterie mit einem entsprechenden elektrischen Steckverbinder der Batterie (8) zusammenzuwirken,
wobei die Steckverbinder-Stütze (11) durch elastische Mittel mit der Struktur des Fahrzeugs (24) verbunden ist,
wobei die Vorrichtung konfiguriert ist, damit die Batterie (2) durch einfaches translatorisches Einsetzen in die Aufnahme (3) angeschlossen werden kann;
**dadurch gekennzeichnet, dass** die elastischen Mittel (20) aus einer Einheit an elastischen Stiften bestehen, die angepasst sind, um sich in der Einsetzrichtung der Batterie zu verformen, um eine vertikale Bewegung der Batterie nach oben und nach unten zu ermöglichen;
und dadurch, dass die Vorrichtung weiter einen Deckel beinhaltet, der es ermöglicht, die offene Seite der Aufnahme in einer geschlossenen Position zu verschließen, oder in einer offenen Position freizugeben, wobei der Deckel in der geschlossenen Position eine zur Aufnahme (3) innere Seite beinhaltet, die mit einem elastischen Element (23) versehen ist, das angepasst ist, um sich an einer Seite der Batterie gegenüber dem elektrischen Steckverbinder der Batterie (8) anzulegen.

2. Vorrichtung nach Anspruch 1, wobei die Vorrichtung konfiguriert ist, sodass die elastischen Stifte das Gewicht der Batterie tragen.

3. Vorrichtung nach Anspruch 1 oder Anspruch 2, wobei der elektrische Steckverbinder des Fahrzeugs (12) schwimmend auf der Steckverbinder-Stütze (11) montiert ist, sodass er zwei Freiheitsgrade in einer Ebene aufweist, welche durch die Steckverbinder-Stütze gebildet wird.

4. Vorrichtung nach einem der Ansprüche 1 bis 3, wobei die Aufnahme (3) eine prismatische Form mit einer nicht kreisrunden Basis aufweist, sodass die Wände der Aufnahme (3) die Batterie leiten, welche eine bis auf ein Spiel genaue entsprechende Form in der Einsetzrichtung der Batterie (2) aufweist.

5. Vorrichtung nach einem der vorstehenden Ansprüche, wobei der Deckel ein Sattel (4) ist, der an die Struktur des Fahrzeugs (24) gebunden ist.

6. Vorrichtung nach einem der vorstehenden Ansprüche, wobei das elastische Element (23) aus einem elastischen Schaumstoffblock gebildet ist.

7. Vorrichtung nach Anspruch 6, wobei der Schaumstoff ein Schaumstoff aus Elastomer, beispielsweise aus Gummi, aus Polyurethan, oder aus Silikon ist.

8. Vorrichtung nach einem der vorstehenden Ansprüche, wobei der Boden der Aufnahme (21) gegenüber der Struktur des Fahrzeugs (24) feststehend ist, und die Steckverbinder-Stütze (11) durch die elastischen Mittel (20) mit dem Boden verbunden ist.

9. Vorrichtung nach einem der Ansprüche 1 bis 7, wobei die Steckverbinder-Stütze starr an den Boden der Aufnahme gebunden ist, oder durch den Boden der Aufnahme gebildet wird, und wobei der Boden der Aufnahme (21) durch die elastischen Mittel mit der Struktur des Fahrzeugs (24) verbunden ist.

10. Vorrichtung nach einem der vorstehenden Ansprüche, wobei jeder elastische Stift aus einem oder mehreren Elementen aus Elastomer, beispielsweise aus Gummi, aus Polyurethan, oder aus Silikon gebildet ist.

11. Vorrichtung nach einem der vorstehenden Ansprüche, wobei jeder elastische Stift hohl ist, oder eine Öffnung beinhaltet, die dessen Starrheit in der Einsetzrichtung der Batterie verringert.

12. Vorrichtung nach einem der vorstehenden Ansprüche, wobei die elastischen Mittel eine Härte aufweisen, die zwischen Shore 00 10 und Shore A 100 liegt.

13. Fahrzeug, insbesondere Elektroroller (1), der eine Vorrichtung nach einem der vorstehenden Ansprüche beinhaltet.

## Claims

1. Device for receiving a battery (2) for an electric vehicle, the device including
a housing (3) provided in a structure of the vehicle (24) and adapted to receive at least one battery (2), the housing (3) including an open face for introducing the battery (2) into the housing (3) in a so-called vertical direction of introducing the battery,
the housing (3) including a bottom (21) opposite to its open face,
the device including, at said bottom (21), a connector support (11) and an electrical connector (12) of the vehicle connected to said connector support (11),
the electrical connector of the vehicle (12) being adapted to cooperate by plugging in in the direction of introducing the battery with a corresponding electrical connector of the battery (8),
the connector support (11) being connected to the structure of the vehicle (24) by elastic means,
the device being configured so that the battery (2) can be connected by simple translational insertion in the housing (3) ;
**characterised in that** the elastic means (20) consist of a set of elastic studs adapted to deform in the direction of introducing the battery so as to allow a vertical movement of the battery upwards and downwards;
and **in that** the device furthermore includes a cover for closing off in a closed position, or leaving clear in an open position, the open face of the housing, the cover in the closed position including a face internal to the housing (3) provided with an elastic element (23) adapted to bear on a face of the battery opposite to the electrical connector of the battery (8).

2. Device according to claim 1, said device being configured so that the elastic studs support the weight of the battery.

3. Device according to claim 1 or claim 2, wherein the electrical connector of the vehicle (12) is mounted floating on the connector support (11) so that it has two degrees of freedom, in a plane formed by the connector support.

4. Device according to one of claims 1 to 3, wherein the housing (3) has a prismatic shape with a non-circular base, so that the walls of the housing (3) guide the battery, which has a corresponding shape to within a clearance, in the direction of introducing the battery (2).

5. Device according to one of the preceding claims, wherein the cover is a saddle (4) connected to the structure of the vehicle (24).

6. Device according to any one of the preceding claims, wherein the elastic element (23) is formed by a block of elastic foam.

7. Device according to claim 6, wherein the foam is an elastomer foam, for example rubber, polyurethane or silicone.

8. Device according to any one of the preceding claims, wherein the bottom of the housing (21) is fixed with respect to the structure of the vehicle (24), and the connector support (11) is connected to said bottom by elastic means (20) .

9. Device according to one of claims 1 to 7, wherein the connector support is rigidly connected to the bottom of the housing or formed by the bottom of the housing, and wherein the bottom of the housing (21) is connected to the structure of the vehicle (24) by the elastic means.

10. Device according to any one of the preceding claims, wherein each elastic stud is formed by one or more elements made from elastomer, for example from rubber, polyurethane or silicone.

11. Device according to any one of the preceding claims, wherein each elastic stud is hollow and includes an opening that reduces the rigidity thereof in the direction of introducing the battery.

12. Device according to one of the preceding claims, wherein the elastic means have a hardness of between Shore 00 10 and Shore A 100.

13. Vehicle, in particular an electric scooter (1), including a device according to any one of the preceding claims.
